# EUROPÄISCHE PATENTSCHRIFT

(11) **EP 0 236 712 B1**
(45) Veröffentlichungstag und Bekanntmachung des Hinweises auf die Patenterteilung: **24.11.1993**
(21) Anmeldenummer: 87101062.5
(22) Anmeldetag: 27.01.1987
(51) Int. Cl.: G02B 6/38

(54) **Verfahren zum positionsgerechten Fügen von Lichtwellenleitern in Koppelstellen und Koppelelement für Lichtwellenleiter-Schalter**
Method to align optical waveguides at a coupling joint and a coupling element for an optical waveguide switch
Méthode d'alignement de guides d'ondes à l'endroit de couplage et élément de couplage pour un commutateur à guides d'ondes optiques

(30) Priorität: 07.03.1986 DE 3607566
(43) Veröffentlichungstag der Anmeldung: 16.09.1987
(73) Patentinhaber: SIEMENS AKTIENGESELLSCHAFT, 80333 München (DE)
(72) Erfinder: Eicher, Joachim, Dipl.-Ing., D-1000 Berlin 31 (DE); Kiesewetter, Lothar, Prof. Dr.-Ing., D-1000 Berlin 42 (DE)

(56) Entgegenhaltungen:
- DE-A- 2 505 027
- US-A- 4 325 607
- US-A- 4 529 265
- IEEE TRANSACTIONS ON MICROWAVE THEORY AND TECHNIQUES, Band MTT-30, Nr. 10, Oktober 1982, Seiten 1561-1568, IEEE, New York, US; GIOK-DJAN KHOE et al.: "Single-mode fiber connector using core-centered ferrules"
- PATENT ABSTRACTS OF JAPAN, Band 5, Nr. 32, (P-50)[704], 27. Februar 1981; & JP-A-55 156 903

## Beschreibung

Die Erfindung betrifft ein Verfahren zur axialen gegenseitigen Ausrichtung von Lichtwellenleitern in Faser-zu-Faser-Koppelstellen, wobei die Kopplungsenden der zu koppelnden optischen Fasern auf einem gemeinsamen Trägerelement oder jeweils auf einem eigenen Trägerelement ausgerichtet und fixiert werden. Außerdem betrifft die Erfindung ein Koppelelement für einen Lichtwellenleiter-Schalter.

Beim Fügen von Lichtwellenleitern in Koppelstellen, wie z. B. in Schaltern, kommt es auf eine exakte Ausrichtung der optischen Achsen und einen geringen Abstand zwischen den Stirnflächen der Lichtwellenleiter an. Ansonsten entstehen durch eine mechanische Fehlpositionierung Transmissionsverluste in der Koppelstelle. Man unterscheidet hierbei zwischen Verlusten aufgrund eines radialen Versatzes der optischen Achsen, eines axialen Abstandes der Faserstirnflächen und eines Winkelfehlers zwischen den optischen Achsen.

Bekannte Verfahren benötigen zum Ausrichten der Lichtwellenleiter in Koppelstellen, beispielsweise bei lösbaren Steckverbindungen, extrem aufwendige und paßgenaue Bauteile mit mehr oder weniger gut zueinander fluchtenden Bohrungen, in denen die Glasfasern ausgerichtet und fixiert sind. Aus der DE-AS 25 05 027 ist ein Verbinder für Lichtwellenleiter bekannt, der Kappillaren aufweist, die jeweils zwei stirnseitig miteinander zu koppelnde Lichtwellenleiterenden aufnehmen. Die Koppelstelle ist dabei nicht zugänglich, da sie innerhalb der jeweiligen Kappillare liegt. Eine solche Kopplung ist für lösbare Verbindungen nur bedingt geeignet und für schaltbare Verbindungen ungeeignet.

Bei der Herstellung von schaltbaren Koppelstellen versucht man, durch hochpräzise Vorrichtungen mit exakten Führungen und Feinverstellungen ein Fluchten der Fasern zu erreichen. Ein derartiger Schalter ist beispielsweise in der DE-OS 31 38 686 beschrieben. Die Fasern werden in derartigen Schaltern üblicherweise mit ihren Kopplungsenden auf die jeweiligen feststehenden bzw. beweglichen Trägerelemente aufgelegt, so gut wie möglich zueinander ausgerichtet und festgeklebt. Dieser Vorgang ist beispielsweise in der DE-OS 33 35 673 beschrieben.

Gerade bei mechanisch schaltbaren Koppelstellen, bei denen man eine Faser mit einer oder mehreren weiteren Fasern wahlweise koppeln möchte, zeigen diese bekannten Verfahren prinzipielle Schwierigkeiten. Sollen die Fasern nämlich in einer Vorrichtung montiert werden, so können diese nur in einer Schaltstellung ausgerichtet werden. In den anderen Schaltstellungen kommt man um eine aufwendige Justierung der bereits fixierten Fasern nicht herum.

Der Erfindung liegt die Aufgabe zugrunde, ein Fügeverfahren zu entwickeln, das bei der Montage von Lichtwellenleitern in Faser-zu-Faser-Koppelstellen der eingangs genannten Art ohne präzise Vorrichtungen und aufwendige Justagen auskommt, Winkelfehler und Achsversatz vermeidet, den Abstand der Faserstirnflächen minimal hält, einen Ausgleich der Kernexzentrizitäten ermöglicht und Bauteiltoleranzen auffangen kann. Außerdem soll mit der Erfindung eine Vorrichtung zur Durchführung eines solchen Verfahrens und ein Koppelelement für einen Lichtwellenleiter-Schalter geschaffen werden, der diese genannten Vorteile aufweist.

Diese Aufgabe wird erfindungsgemäß dadurch gelöst, daß auf dem gemeinsamen Trägerelement oder auf den jeweiligen Trägerelementen zu beiden Seiten der Koppelstelle der Faserenden jeweils ein Führungselement für die entsprechende optische Faser mit einer zum Mantel der zu koppelnden optischen Fasern paßgenauen Führungskapillare angeordnet wird, daß die Führungselemente mit Hilfe einer verzugsfreien, beide Führungskapillaren durchsetzenden Hilfsfaser, die den gleichen Durchmesser wie die zu koppelnden optischen Fasern aufweist, fluchtend ausgerichtet und auf dem gemeinsamen oder ihrem jeweiligen Trägerelement fixiert werden und daß nach Entfernung der Hilfsfaser die Kopplungsenden der zu koppelnden optischen Fasern in die jeweiligen Führungskapillaren eingefügt und fixiert werden.

Mit dem erfindungsgemäßen Verfahren werden also nicht die zu koppelnden optischen Fasern selbst sofort auf den Trägerelementen angeordnet und festgeklebt, vielmehr werden die genannten Führungselemente mit den Führungskapillaren auf die Trägerelemente aufgebracht und ausgerichtet. Da die Hilfsfaser in der Koppelstelle nicht gebrochen ist, sondern über die Koppelstelle hinweg durch beide Führungselemente sich erstreckt, können diese auf sehr einfache Weise und trotzdem äußerst genau ausgerichtet werden. Die Hilfsfaser ist verzugsfrei, d. h. sie verläuft während des Ausrichtsvorgangs gerade und verzieht sich nicht. Sind dann diese Führungselemente auf den jeweiligen Trägerelementen ausgerichtet und fixiert, so kann die Hilfsfaser ohne weiteres herausgenommen werden. Die danach in die Führungskapillaren eingefügten optischen Fasern sind dann durch die Führungselemente optimal fluchtend zueinander ausgerichtet.

Eine besonders einfache Ausgestaltung des Fügeverfahrens besteht darin, daß die Führungselemente erst beim Aufbringen auf die Trägerelemente geformt werden, indem nämlich die Hilfsfaser aufgelegt und beiderseits der Koppelstelle mit einem plastischen oder flüssigen, jedoch aushärtbaren bzw. erstarrenden Material im gewünschten Führungsbereich ummantelt wird. Dieses Material muß dabei so beschaffen sein, daß es gegenüber der Hilfsfaser nur geringe, gegenüber der Unterlage bzw. dem jeweiligen Trägerelement jedoch große Bindungskräfte besitzt. Falls nötig, kann die Hilfsfaser vor der Ummantelung auch mit einem dünnen Trennmittelfilm versehen werden, um das Herausnehmen der Hilfsfaser nach dem Formvorgang zu erleichtern. Die Hilfsfaser selbst kann eine Glasfaser sein, doch braucht sie keine lichtleitenden Eigenschaften zu besitzen. So kommen auch andere Fasern oder Drähte aus steifem und zugfestem Material in Betracht, beispielsweise Stahldraht, SiC-Whisker-Draht oder Bor-Faser.

In einer anderen Ausführungsform können die Führungselemente auch in Form vorgefertigter, mit den Führungskapillaren bereits versehener Führungshülsen verwendet werden, welche gemeinsam zur Ausrichtung auf der Hilfsfaser aufgefädelt, zu beiden Seiten der Koppelstelle angeordnet und dann auf dem jeweiligen Trägerelement fixiert werden. Hierbei können formstabile Materialien, wie Stahl oder Glas, neben Kunststoffen verwendet werden.

Unabhängig davon, ob die Führungselemente vorgefertigt oder unmittelbar beim Aufbringen auf die Trägerelemente ausgeformt werden, können die Führungskapillaren in den Führungselementen jeweils an den von der Koppelstelle abgewandten Enden mit einer trichterförmigen Erweiterung versehen werden, um das Einfügen der Funktionsfasern zu erleichtern. Zu diesem Zweck ist in einer bevorzugten Ausgestaltung des Verfahrens vorgesehen, daß die Hilfsfaser bei der Ausformung der Führungselemente durch Ummantelung an dem von der Koppelstelle abgewandten Bereich der Führungselemente jeweils eine tropfen- oder kegelförmige Umhüllung aus einem Trennmaterial erhält, welche zusammen mit der Hilfsfaser ummantelt wird, um das Führungselement auszubilden, wobei nach dem Aushärten bzw. Erstarren des Führungselementes die Hilfsfaser mit der tropfenförmigen Umhüllung aus der Führungskapillare entfernt wird.

Bevorzugt ist die Erfindung bei der Herstellung von Kopplungselementen für Schalter anzuwenden, wobei mindestens ein bewegliches Ende eines Lichtwellenleiters wahlweise mit einem von zwei oder mehr feststehenden Kopplungsenden von Lichtwellenleitern zum Fluchten gebracht werden muß oder auch umgekehrt. Zum positionsgerechten Fügen eines Faserendes gegenüber zwei versetzt angeordneten gegenüberstehenden Faserenden kann vorgesehen werden, daß zunächst ein feststehendes und ein bewegliches Trägerelement mit je einem Führungselement versehen werden, daß dann die Hilfsfaser zumindest aus einem der Führungselemente herausgezogen wird, daß dann das bewegliche Trägerelement in eine andere Position zur Bildung einer zweiten Koppelstelle gebracht und die Hilfsfaser über die zweite Koppelstelle geschoben wird und daß schließlich ein weiteres Führungselement mittels der Hilfsfaser ausgerichtet und fixiert wird. Das Verfahren kann natürlich auch zur Ausrichtung und Fixierung weiterer Führungselemente verwendet werden, falls mehr als zwei Kopplungsstellen zwischen einem feststehenden und einem beweglichen Trägerelement vorgesehen werden sollen.

Eine besonders vorteilhafte Ausgestaltung der Erfindung ist darin zu sehen, daß parallel zu ihrer Längsachse mit einem durchgehenden Schlitz versehene Kapillaren verwendet werden und daß zumindest die zu koppelnden optischen Fasern seitlich durch den Schlitz in die Kapillaren eingefügt werden.

Bei auf diese Weise ausgebildeten Kapillaren wird vorteilhaft vermieden, daß die zu koppelnden optischen Fasern mit ihrem freien Ende voraus in eine von der Kapillare gebildete Röhre eingeschoben werden müssen, wobei von der Innenwand der Kapillare abgelöstes Material auf die Stirnfläche der Faser gelangen kann. Durch das seitliche Einfügen der Faser in die Kapillare bleibt die Faserstirnfläche unbeeinträchtigt und daher in einem für einen optimalen Lichtübergang in die mit ihrer Stirnfläche gegenüberliegende Faser geeigneten Zustand.

Die Erfindung bezieht sich außerdem auf eine Vorrichtung zur Druchführung eines beschriebenen Verfahrens mit wenigstens einem Trägerelement mit zwei im Abstand voneinander auf dem oder den Trägerelementen montierbaren Führungselementen, die jeweils eine zum Mantel der zu koppelnden optischen Fasern paßgenaue Führungskappillare haben, von denen jede mit einem zu ihrer Längsachse durchgehenden Schlitz versehen ist, dessen Ränder elastisch spreizbar ausgebildet sind und dessen Breite geringer ist als der Durmesser der Faser und mit einer durch die Schlitze in beide Führungskappillaren einsetzbaren Hilfsfaser, die den gleichen Durchmesser wie die zu koppelnden optischen Fasern aufweist.

Hierdurch wird trotz einer Umschlingung der Faser von größer 180° das Einfügen der Faser in die Kapillare und auch das Herausnehmen einer Faser, z.B. der Hilfsfaser, aus der Kapillare ermöglicht.

Die Vorrichtung kann vorteilhaft dadurch ausgestaltet sein, daß die Innenwand der Führungskappillaren durch ein von der Hilfsfaser gelöstes Fasercoating gebildet ist.

Weiterhin wird die erfindungsgemäße Aufgabe gelöst mit einem Koppelelement für einen Lichtwellenleiter-Schalter mit mindestens einem feststehenden Trägerelement und einem in mindestens zwei Positionen verstellbaren beweglichen Trägerelement, wobei auf jedem Trägerelement mindestens ein Koppelende einer zu koppelnden optischen Faser fixierbar ist und wobei in mindestens einer Position des beweglichen Trägerelementes zwei Trägerelemente so zueinander angeordnet sind, daß von ihnen getragene optische Fasern miteinander fluchten, welches dadurch gekennzeichnet ist, daß die Trägerelemente jeweils auf ihnen fixierte Führungselemente mit vorgeformten, dem Durchmesser der jeweiligen zu koppelnden Faser angepaßten Führungskapillaren aufweisen, in welche die Kopplungsenden der zu koppelnden optischen Fasern einfügbar und in denen sie nachträglich fixierbar sind. Ausgestaltungen eines derartigen Koppelelementes sind in den Unteransprüchen 21 bis 25 angegeben.

Die Erfindung wird nachfolgend an Ausführungsbeispielen anhand der Zeichnung näher erläutert. Es zeigen
- Fig. 1a bis 1d: das erfindungsgemäße Fügen zweier Koppelenden von Lichtwellenleitern auf einem gemeinsamen Trägerelement,
- Fig. 2: eine Schnittdarstellung II-II aus Fig. 1b,
- Fig. 3a bis 3c: die Herstellung von Einfädeltrichtern in Führungskapillaren von Führungselementen,
- Fig. 4: eine Ansicht IV aus Fig. 3c,
- Fig. 5a und 5b: die Ausrichtung und Fixierung von vorgefertigten Führungselementen,
- Fig. 6a bis 6h: das Fügen von Lichtwellenleitern in einem Koppelelement eines Schalters mit zwei Schaltstellungen.
- Fig. 7 bis Fig. 12: Kapillaren in Führungselementen, die auf einer achsparallelen Seite geöffnet und von daher zugänglich sind.

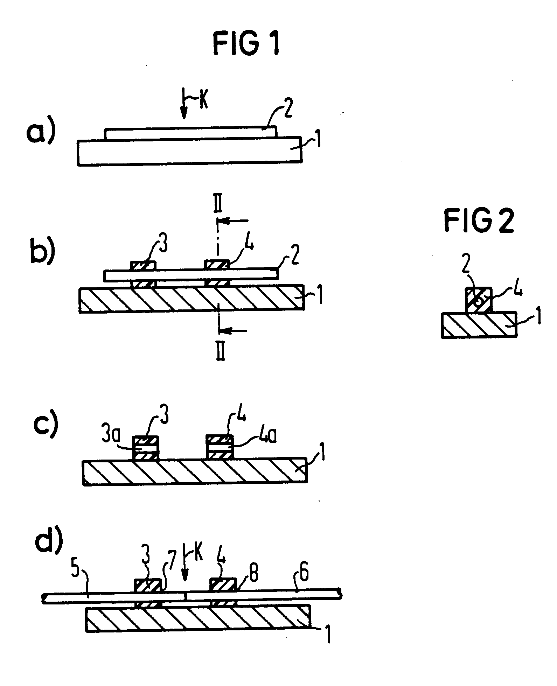

Das Grundprinzip der Erfindung soll am Beispiel einer nichtlösbaren Verbindung anhand der Fig. 1a bis 1d erläutert werden, deren Endzustand nach Fig. 1d dann erreicht sei, wenn die zu koppeln den Fasern fluchtend und fest fixiert einander gegenüberstehen.

Zur Herstellung der Koppelstelle geht man von einem mechanisch steifen Trägerelement 1 aus, z. B. einer Platte oder einem Rohr, an das keine hohen Ansprüche hinsichtlich einzuhaltender Fertigungstoleranzen oder einer besonderen Oberflächengüte gestellt werden. Auf dieses Trägerelement 1 wird gemäß Fig. 1a eine kurze Hilfsfaser 2 aufgelegt, welche im Durchmesser den später zu fügenden optischen Fasern entspricht. Die Koppelstelle K soll auf dem Trägerelement 1 an der mit einem Pfeil angegebenen Position vorgesehen werden.

Aufbauend auf das Trägerelement 1 werden nun gemäß Fig. 1b zwei dicht beieinander und beiderseits der Koppelstelle K liegende Führungselemente 3 und 4 aufgebracht, indem die Hilfsfaser 2 mit einem plastischen, aushärtbaren oder erstarrenden Material, wie Kunststoff, Lot oder dergl., ummantelt wird. Das zur Ummantelung benutzte Material sollte gegenüber der Glasfaser bzw. Hilfsfaser 2 nur geringe, gegenüber dem Trägerelement 1 aber große Bindungskräfte besitzen. Die Hilfsfaser 2, die zur besseren Entformung vor der Ummantelung gegebenenfalls mit einem dünnen Trennmittelfilm versehen wurde, wird nach dem Verfestigen der Ummantelung mit den Führungselementen 3 und 4 aus diesen herausgezogen. Auf dem Trägerelement 1 bleiben somit zwei zueinander fluchtende und zum Außendurchmesser der Hilfsfaser wie auch zum Außendurchmesser der zu koppelnden optischen Fasern paßgenaue Führungskapillaren 3a bzw. 4a in den Führungselementen 3 und 4 stehen (Fig. 1c).

In diese Führungskapillaren 3a und 4a werden anschließend von beiden Seiten die zu koppelnden optischen Fasern 5 und 6 eingeführt (Fig. 1d); ein mechanischer Achsversatz und Winkelfehler werden damit ausgeschlossen. Selbst bei einer nichtlösbaren Verbindung bietet die erfindungsgemäße Ausrichtung der zu koppelnden Faserenden über zwei Führungselemente zu beiden Seiten der Koppelstelle Vorteile gegenüber der Kopplung in einer einzigen Führungskapillare. Hierbei ist nämlich die Fügestelle frei zugänglich für einen Reinigungsprozeß der Faserstirnflächen und für die Ausführung als Klebespleiß oder thermischen Spleiß vorbereitet.

Die je Faser verbleibenden rotatorischen und translatorischen Freiheitsgrade in den Führungskapillaren 3a und 4a können zur feinfühligen Endjustage der Fasern 5 und 6 benutzt werden. Zum einen kann mit dem rotatorischen Freiheitsgrad ein zurückgebliebener optischer Achsversatz, beispielsweise hervorgerufen durch Kernexzentrizitäten der Fasern, durch entsprechendes Verdrehen der Fasern um ihre Achse minimiert werden, zum anderen kann mit dem translatorischen Freiheitsgrad der Abstand der Stirnflächen voneinander, in diesem Fall auf Stoß, eingestellt werden.

Ist die Endjustage abgeschlossen, werden die zu koppelnden optischen Fasern 5 und 6, vorzugsweise durch Ausfüllen der Kapillarspalte 7 und 8 zwischen Fasern und Führungselementen mittels Klebstoff, fixiert.

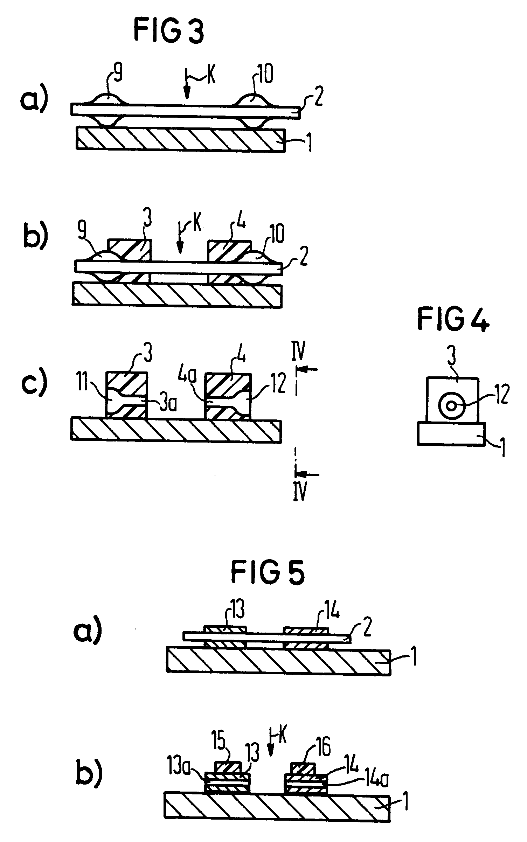

Das Einfädeln der zu koppelnden optischen Faser in die paßgenauen Führungskapillaren 3a und 4a kann erleichtert werden, indem Trichter, die sich zu den Führungskapillaren hin verjüngen, im Bereich der Einführöffnungen angeformt werden, wie dies anhand der Fig. 3a bis 3c gezeigt ist. Solche Trichter können nachträglich mit einem Bohrer angebracht werden. Besonders vorteilhaft können diese Trichter aber bereits beim Herstellen der Führungskapillaren 3a und 4a erzeugt werden, indem vorzugsweise ein Tropfen 9 bzw. 10 eines leicht entfernbaren Trennmittels, beispielsweise Wachs, im Bereich der späteren Einführöffnung der Führungskapillaren auf die Hilfsfaser 2 aufgebracht wird. Beim Herstellen der Führungskapillaren 3a und 4a durch Abformung der Hilfsfaser 2 in der Ummantelung mit den Führungselementen 3 und 4 wird der jeweilige Tropfen 9 bzw. 10 teilweise mit umgossen, wie in Fig. 3b gezeigt. Nach Entfernen der Hilfsfaser 2 und der Tropfen 9 und 10 bleiben die gewünschten Einführtrichter 11 und 12 in den Führungskapillaren 3a und 4a bestehen (Fig. 2c und Fig. 4).

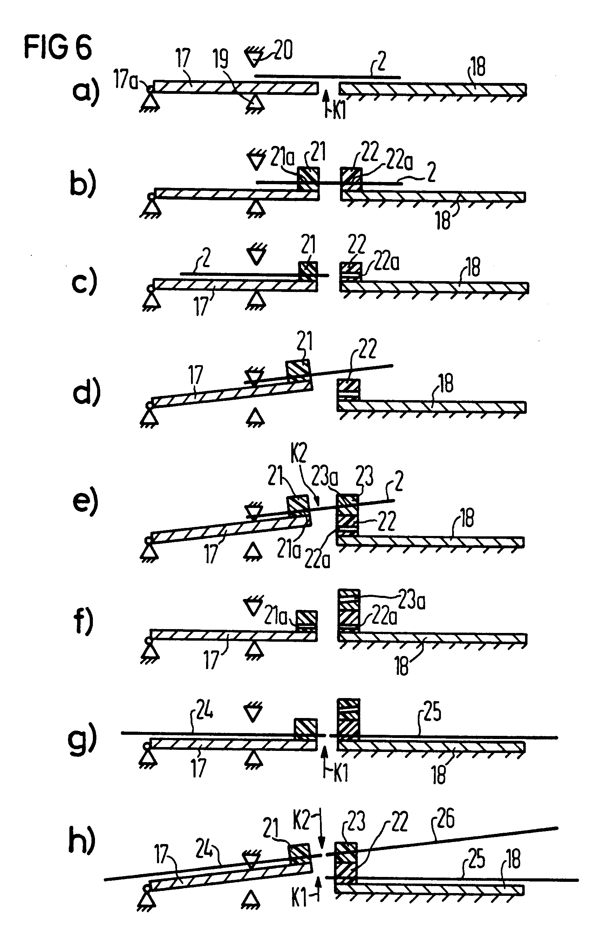

Eine weitere Möglichkeit, fluchtende Führungskapillaren zu realisieren, besteht nach Fig. 5 darin, bereits zur Hilfsfaser 2 paßgenaue Halbzeuge in Form von Führungshülsen 13 und 14 zu verwenden, in denen die Führungskapillaren 13a und 14a bereits durch Bohren oder durch entsprechendes Abformen von einer Hilfsfaser eingebracht sind. Für diese Führungshülsen können auch andere Materialien als Kunststoff, beispielsweise Stahl oder Glas, verwendet werden. Diese vorgeformten Führungshülsen 13 und 14 werden mit Hilfe einer durchgesteckten Hilfsfaser 2 auf dem Trägerelement 1 ausgerichtet (Fig. 5a) und anschließend auf der Bezugsebene des Trägerelementes fixiert (Fig. 5b), wobei eine Klebstoffumhüllung 15 bzw. 16 Verwendung finden kann.

Dieses zunächst am Beispiel einer nichtlösbaren Verbindung dargestellte Verfahren zum positionsgerechten Fügen von Lichtwellenleitern läßt sich in entsprechender Vorgehensweise auf alle weiteren Anwendungen übertragen, bei denen es um Kopplungen zwischen Fasern geht, die auch lösbar und schaltbar sein können.

Besondere Vorteile bringt dieses Verfahren nach der Erfindung bei der Herstellung von mechanisch schaltbaren Koppelstellen, wie dies in den Fig. 6a bis 6h gezeigt ist. Das dort schematisch dargestellte Koppelelement ist beispielsweise Teil eines Schalters, wie er in der eingangs genannten DE-OS 31 38 686 beschrieben ist. Dieses Koppelelement besitzt ein bewegliches Trägerelement 17, das an einem Ende 17a schwenkbar gelagert ist, sowie ein feststehendes Trägerelement 18. Das bewegliche Trägerelement 17, das beispielsweise als Schaltzunge in einem Relais ausgebildet ist, ist zwischen zwei festen Anschlägen 19 und 20 umschaltbar, wobei eine lichtleitende Faser 24 wahlweise mit einer der Fasern 25 bzw. 26 gekoppelt werden kann (Fig. 6h). Die beiden Fasern 25 und 26 sind dabei auf dem feststehenden Trägerelement 18 fixiert.

Ausgehend von einer Grundstellung, wie in Fig. 6a gezeigt, in der beispielsweise die Oberfläche des feststehenden Trägerelementes 18 und die des beweglichen Trägerelementes 17 in einer Ebene liegen, werden zu beiden Seiten der Koppelstelle zwei Führungselemente 21 und 22 aufgebaut, in denen mit Hilfe der über die Koppelstelle K1 gelegten Hilfsfaser 2 zwei fluchtende Führungskapillaren 21a und 22a erzeugt werden. Dies erfolgt in der gleichen Weise, wie dies anhand der vorangehenden Figuren bei der Herstellung einer nichtlösbaren Verbindung dargestellt und beschrieben wurde.

Sind die beiden Führungskapillaren 21a und 22a gemäß Fig. 6a bis 6c hergestellt, so wird, wie in Fig. 6c gezeigt, die Hilfsfaser 2 aus der Führungskapillare 22a herausgezogen, und das bewegliche Schaltelement 17 wird in die zweite Schaltstellung zum Anschlag 20 umgeschaltet. Die in der Führungskapillare 21a geführte Hilfsfaser 2 wird nun über die Koppelstelle K2 hinweggeschoben und als Lehre für eine weitere Führungskapillare 23a eines Führungselementes 23 benutzt. Die Hilfsfaser 2 wird dabei verzugsfrei gemäß Fig. 6e mit aushärtendem Material ummantelt, wie dies auch in den vorangehenden Fällen beschrieben ist. Die zur Herstellung und Ausrichtung der Führungskapillaren benutzte Hilfsfaser 2 wird nach dem Aushärten entfernt, so daß sich nun in der jeweiligen Schaltstellung entweder die Führungskapillaren 21a und 22a oder 21 und 23a zu beiden Seiten des Schaltspaltes, also der Koppelstelle K1 bzw. K2, fluchtend gegenüberstehen (Fig. 6f). Diese Art des Kopierens von Führungskapillaren kann je nach gewünschter Funktion und Anzahl von Koppelstellen fortgesetzt werden.

Nach dem Einsetzen der zu koppelnden optischen Fasern 24, 25 und 26 werden diese, ausgehend von der in Fig. 6g dargestellten Schaltstellung, nacheinander hinsichtlich Stirnflächenabstand und Kernexzentrizität eingestellt (Fig. 6h). Die Fasern werden anschließend in den Führungskapillaren fixiert.

Das erfindungsgemäße Verfahren garantiert somit eine fluchtende Anordnung der zu koppelnden optischen Fasern auch in mehreren Schaltebenen, die durch Festanschläge begrenzt werden können. Dadurch ist eine einfache Justage gewährleistet, die sich auf das Einstellen des axialen Stirnflächenabstandes und gegebenenfalls Minimierung des Achsversatzes infolge einer Kernexzentrizität gegenüber dem Fasermantel beschränkt. An die Maßhaltigkeit der Bauteile werden nur geringe Anforderungen gestellt, da sich die Faserpositionierung an den mechanisch fest vorgegebenen Schaltstellungen orientiert. Eine mehrfache Anordnung parallel arbeitender Koppelstellen ist auf engstem Raum möglich. Bei einer Mehrfachanordnung solcher Koppelstellen beispielsweise in einem Schalter können auch mehrere Paare von Führungselementen gleichzeitig mit Hilfe mehrerer Hilfsfasern hergestellt bzw. ausgerichtet und fixiert werden.

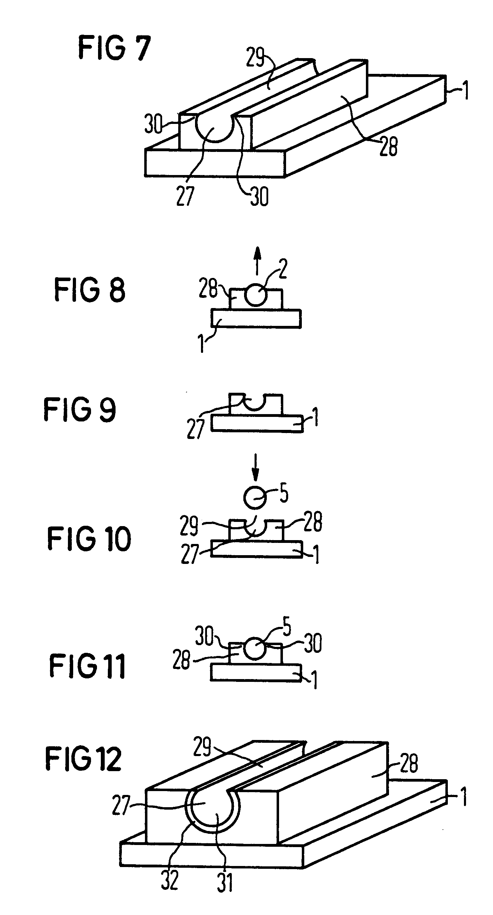

Die in den vorstehend beschriebenen Ausführungsbeispielen mit 3a, 4a, 13a, 14a und 21a, 22a sowie 23a bezeichneten Führungskapillaren können vorteilhaft auch so ausgebildet werden, daß sie auf einer achsparallelen Seite durchgehend offen sind. Eine solche seitlich offene Kapillare 27 in einem Führungselement 28, das auf einem Trägerelement 1 fixiert ist, zeigt Fig. 7. Ein solches Führungselement 28 mit seitlich offener Kapillare 27 kann entweder an Ort und Stelle auf dem Trägerelement 1 mittels eines Abformungsprozesses und unter Verwendung einer Hilfsfaser erzeugt werden oder als vorgefertigtes Teil auf das Trägerelement 1 aufgesetzt, mittels einer Hilfsfaser justiert und dann an dem Trägerelement 1 fixiert werden.

Bei der Herstellung eines Führungselementes 28 ist jedenfalls darauf zu achten, daß die Kapillare 27 einen achsparallelen Schlitz 29 aufweist, so daß z.B. die Hilfsfaser 2 aus der Kapillare 27, nach der Abformung der Hilfsfaser 2 unter Aussparung eines Winkelbereiches von z.B. 120°, quer zur Längsachse der Kapillare 27 herausgenommen werden kann, wie dies in Fig. 8 durch den Pfeil angedeutet ist.

Dabei ist es vorteilhaft, wenn das zur Erzeugung des Führungselementes 28 und damit der Kapillare 27 verwendete Material den Rändern 30, die den Schlitz 29 begrenzen, eine gewisse Elastizität verleiht, so daß die Ränder 30 beim Herausnehmen der Hilfsfaser elastisch auseinanderweichen können.

In die somit erhaltene Kapillare 27 (Fig. 9), die wie in den vorstehend beschriebenen Ausführungsbeispielen mit Hilfe einer Hilfsfaser 2 über eine Lichtwellenleiter-Koppelstelle hinweg, mit ihrer Längsachse genau auf die Längsachse einer entsprechenden weiteren Kapillare 27 in einem weiteren Führungselement 28 ausgerichtet worden ist, wird dann eine zu koppelnde optische Faser 5, die hier auch stellvertretend für die weiteren zu koppelnden optischen Fasern 6, 24, 25 und 26, so bezeichnet ist, in die Kapillare 27 durch den Schlitz 29 hindurch eingedrückt, wobei wiederum die Ränder 30, bei entsprechender Materialwahl für das Führungselement 28 elastisch auseinanderweichen. Sitzt schließlich die zu koppelnde optische Faser 5 in der Kapillare 27 des Führungselementes 28, wie dies Fig. 11 zeigt, dann wird die Faser 5 von den Rändern 30, die wieder ihre ursprüngliche Position einnehmen, in der Kapillare 27 festgehalten.

Beim Eindrücken der zu koppelnden optischen Faser 5 in die Kapillare 27 ist darauf zu achten, daß sich eine endseitige Stirnfläche der Faser 5 außerhalb des Führungselementes 28 befindet, so daß bei einem nachfolgenden achsparallelen Verschieben der Faser 5 in der Kapillare 27 zum Einstellen eines optimalen Abstandes zwischen der Stirnfläche der Faser 5 und einer Stirnfläche einer mit der Faser 5 zu koppelnden Faser keine Verschiebung der Stirnfläche der Faser 5 innerhalb des Führungselementes 28 erforderlich ist.

Auf diese Weise, nämlich durch das seitliche Einfügen einer zu koppelnden Faser 5 in eine Kapillare 27, wird sichergestellt, daß die Stirnfläche der Faser 5, über die das von der Faser 5 transportierte Licht in die Faser 5 ein- oder aus dieser austritt, nicht durch ein achsparalleles Einschieben der Faser 5 in die Kapillare 27, z.B. durch Abstreifen von Material von der Innenwand der Kapillare 27, verunreinigt werden kann.

Die Innenwand 31 der Kapillare 29 kann vorteilhaft auch durch ein Coating 32 der Hilfsfaser 2 gebildet werden, das sich bei geeigneter Materialwahl, beim Abformen der Hilfsfaser und der Bildung des Führungselementes 28 und der Kapillare 27 mit dem Material des Führungselementes 28 verbindet und beim Herausnehmen der Hilfsfaser aus der Kapillare 27 von der Hilfsfaser gelöst wird. Dabei muß das Coating 32 vor dem Herausnehmen der Hilfsfaser 2 aus der Kapillare 27 entlang einer Mantellinie im Bereich des Spaltes 29 geöffnet werden.

## Patentansprüche

1. Verfahren zur axialen gegenseitigen Ausrichtung von Lichtwellenleitern in Faser-zu-Faser-Koppelstellen, wobei die Kopplungsenden der zu koppelnden optischen Fasern (5, 6, 24, 25, 26) auf einem gemeinsamen Trägerelement (1, 17, 18) oder jeweils auf einem eigenen Trägerelement ausgerichtet und fixiert werden,
**dadurch gekennzeichnet,** daß auf dem gemeinsamen Trägerelement oder auf den jeweiligen Trägerelemententen (1, 17, 18) zu beiden Seiten der Koppelstelle (K) der Faserenden jeweils ein Führungselement (3, 4, 13, 14, 21, 22, 23) für die entsprechende optische Faser mit einer zum Mantel der zu koppelnden optischen Fasern paßgenauen Führungskapillare (3a, 4a, 13a, 14a, 21a, 22a, 23a) angeordnet wird, daß die Führungselemente (3, 4, 13, 14, 21, 22, 23) mit Hilfe einer verzugsfreien, beide Führungskapillaren durchsetzenden Hilfsfaser (2), die den gleichen Durchmesser wie die zu koppelnden optischen Fasern (5, 6, 24, 25, 26) aufweist, fluchtend ausgerichtet und auf dem gemeinsamen oder ihrem jeweiligen Trägerelement (1, 17, 18) fixiert werden und daß nach Entfernung der Hilfsfaser (2) die Kopplungsenden der zu koppelnden optischen Fasern (5, 6, 24, 25, 26) in die jeweiligen Führungskapillaren (3a, 4a, 13a, 14a, 21a, 22a, 23a) eingefügt und fixiert werden.

2. Verfahren nach Anspruch 1,
**dadurch gekennzeichnet,** daß
die Führungselemente (3, 4, 21, 22, 23) durch Aufbringen eines plastischen, aushärtbaren bzw. erstarrenden Materials auf das gemeinsame oder die jeweiligen Trägerelemente (1, 17, 18) zu beiden Seiten der Koppelstelle (K) gebildet werden und daß die Führungskapillaren (3a, 4a, 21a, 22a, 23a) in den Führungselementen (3, 4, 21, 22, 23) durch Abformung der Hilfsfaser (2) gebildet werden, indem die Hilfsfaser (2) beiderseits der Koppelstelle (K) mit dem plastischen Material ummantelt und nach dem Aushärten bzw. Erstarren des Materials aus den Führungselementen (3, 4, 21, 22, 23) entfernt wird.

3. Verfahren nach Anspruch 2,
**dadurch gekennzeichnet,** daß
für die Bildung der Führungselemente (3, 4, 21, 22, 23) ein Material verwendet wird, welches mit dem jeweiligen Trägerelement (1, 17, 18), jedoch nicht mit der Hilfsfaser (2), eine Klebeverbindung eingeht.

4. Verfahren nach Anspruch 2 oder 3,
**dadurch gekennzeichnet,** daß
als Material für die Bildung der Führungselemente (3, 4, 21, 22, 23) ein zähflüssiger, aushärtbarer Kunststoff verwendet wird.

5. Verfahren nach Anspruch 2 oder 3,
**dadurch gekennzeichnet,** daß
als Material für die Bildung der Führungselemente (3, 4, 21, 22, 23) ein vorübergehend verflüssigtes Lot verwendet wird.

6. Verfahren nach einem der Ansprüche 2 bis 5,
**dadurch gekennzeichnet,** daß
die Hilfsfaser (2) vor der Ummantelung mit dem plastischen Material mit einem Trennmittelfilm überzogen wird.

7. Verfahren nach Anspruch 1,
**dadurch gekennzeichnet,** daß
die Führungselemente (13, 14) in Form vorgefertigter, mit den Führungskapillaren (13a, 14a) versehenen Führungshülsen gemeinsam zur Ausrichtung auf der Hilfsfaser (2) aufgefädelt, zu beiden Seiten der Koppelstelle (K) angeordnet und auf dem jeweiligen Trägerelement (1) fixiert werden.

8. Verfahren nach Anspruch 7,
**dadurch gekennzeichnet,** daß
bei der Vorfertigung der Führungselemente die Führungshülsen (13, 14) aus einem formstabilen Material hergestellt und die Führungskapillaren (13a, 14a) durch Bohren eingebracht werden.

9. Verfahren nach Anspruch 7,
**dadurch gekennzeichnet,** daß
die Führungshülsen (13, 14) bei der Vorfertigung durch Ummantelung einer Hilfsfaser mit einem plastischen, aushärtenden bzw. erstarrenden Material und nachfolgendes Entfernen der Hilfsfaser gebildet werden.

10. Verfahren nach einem der Ansprüche 1 bis 9,
**dadurch gekennzeichnet,** daß
die zu koppelnden optischen Fasern (5, 6, 24, 25, 26) nach dem Einfügen in die jeweilige Führungskapillare (3a, 4a, 13a, 14a, 21a, 22a, 23a) mittels eines aushärtbaren Klebers fixiert werden.

11. Verfahren nach einem der Ansprüche 1 bis 10,
**dadurch gekennzeichnet**, daß
mindestens eine der zu koppelnden optischen Fasern vor ihrer Fixierung in der Führungskapillare durch Drehung um ihre Achse justiert wird.

12. Verfahren nach einem der Ansprüche 1 bis 10,
**dadurch gekennzeichnet,** daß
durch Ausrichtung der zu koppelnden optischen Fasern in ihrer Längsrichtung vor ihrer Fixierung der gewünschte Stirnflächenabstand eingestellt wird.

13. Verfahren nach einem der Ansprüche 1 bis 12,
**dadurch gekennzeichnet,** daß
als Hilfsfaser ein Draht aus einem steifen und zugfesten Material verwendet wird, insbesondere ein SiC-Whisker-Draht, ein Stahl-Draht oder eine Bor-Faser.

14. Verfahren nach einem der Ansprüche 1 bis 13,
**dadurch gekennzeichnet,** daß
die Führungskapillaren (3a, 4a) in den Führungselementen (3, 4) an den von der Koppelstelle (K) abgewandten Enden jeweils mit einer trichterförmigen Erweiterung (11, 12) versehen werden.

15. Verfahren nach Anspruch 14,
**dadurch gekennzeichnet,** daß
bei der Ausformung der Führungselemente (3, 4) durch Ummantelung der Hilfsfaser (2) an dem von der Koppelstelle (K) abgewandten Bereich der Führungselemente jeweils eine tropfen- oder kegelförmige Umhüllung (9, 10) aus Trennmaterial auf der Hilfsfaser (2) vorgesehen wird, daß dann die Hilfsfaser (2) zusammen mit der Umhüllung (9, 10) mit dem Führungselement ummantelt wird und daß nach dem Aushärten bzw. Erstarren des Führungselementes (3, 4) die Hilfsfaser (2) mit der Umhüllung (9, 10) entfernt wird.

16. Verfahren nach einem der Ansprüche 1 bis 15,
**dadurch gekennzeichnet,** daß
zum positionsgerechten Fügen eines Faserendes gegenüber zwei versetzt angeordneten Faserenden zunächst ein feststehendes und ein bewegliches Trägerelement (17, 18) mit je einem Führungselement (21, 22) versehen werden, daß dann die Hilfsfaser (2) zumindest aus einem Führungselement entfernt wird, daß das bewegliche Trägerelement (17) in eine andere Position zur Bildung einer zweiten Koppelstelle (K2) gebracht und die Hilfsfaser (2) über die zweite Koppelstelle geschoben wird und daß schließlich ein weiteres Führungselement (23) mittels der Hilfsfaser (2) ausgerichtet und fixiert wird.

17. Verfahren nach Anspruch 16,
**dadurch gekennzeichnet,** daß
das weitere Führungselement (23) unmittelbar auf einem ersten Führungselement (22) aufgebracht bzw. ausgeformt wird.

18. Verfahren nach einem der vorhergehenden Ansprüche 1 bis 17,
**dadurch gekennzeichnet,** daß
wenigstens die zu koppelnden optischen Fasern unter Verwendung von parallel zu ihrer Längsachse mit einem durchgehenden Schlitz versehener Kapillaren seitlich durch den Schlitz in die Kapillaren eingefügt werden.

19. Vorrichtung zur Druchführung des Verfahrens nach Anspruch 18 mit wenigstens einem Trägerelement (17, 18) mit zwei im Abstand voneinander auf dem oder den Trägerelementen (17, 18) montierbaren Führungselementen (3, 4, 21, 22, 23), die jeweils eine zum Mantel der zu koppelnden optischen Fasern paßgenaue Führungskappillare (3a, 4a, 21a, 22a, 23a) haben, von denen jede mit einem zu ihrer Längsachse durchgehenden Schlitz (29) versehen ist, dessen Ränder (30) elastisch spreizbar ausgebildet sind und dessen Breite geringer ist als der Durchmesser der Faser und mit einer durch die Schlitze (29) in beide Führungskappillaren einsetzbaren Hilfsfaser (2), die den gleichen Durchmesser wie die zu koppelnden optischen Fasern (5, 6) aufweist.

20. Vorrichtung nach Anspruch 19,
**dadurch gekennzeichnet,** daß
die Innenwand (31) der Führungskappillaren (3a, 4a, 21a, 22a, 23a) durch ein von der Hilfsfaser (2) gelöstes Fasercoating (32) gebildet ist.

21. Nach einem der Ansprüche 1 - 20 hergestelltes Koppelelement für einen Lichtwellenleiter-Schalter mit mindestens einem feststehenden Trägerelement (18) und einem in mindestens zwei Positionen verstellbaren beweglichen Trägerelement (17), wobei auf jedem Trägerelement (17, 18) mindestens ein Koppelende einer zu koppelnden optischen Faser (24, 25, 26) fixierbar ist und wobei in mindestens einer Position des beweglichen Trägerelementes (17) zwei Trägerelemente (17) so zueinander angeordnet sind, daß von ihnen getragene optische Fasern miteinander fluchten,
**dadurch gekennzeichnet,** daß
die Trägerelemente (17, 18) jeweils auf ihnen fixierte Führungselemente (21, 22, 23) mit vorgeformten, dem Durchmesser der jeweiligen zu koppelnden optischen Faser (24, 25, 26) angepaßten Führungskapillaren (21a, 22a, 23a) aufweisen, in welche die Kopplungsenden der zu koppelnden optischen Fasern einfügbar und in denen sie nachträglich fixierbar sind.

22. Koppelelement nach Anspruch 18,
**dadurch gekennzeichnet,** daß
die Führungselemente als vorgefertigte Kapillarhülsen (13, 14) ausgebildet und auf den Trägerelementen befestigt sind.

23. Koppelelement nach Anspruch 18,
**dadurch gekennzeichnet,** daß
die Führungselemente (21, 22, 23) unmittelbar auf den Trägerlementen (17, 18) ausgeformt und erstarrt bzw. ausgehärtet sind.

24. Nach einem der Ansprüche 1 - 20 hergestellten Koppelnelement für einen Lichtwellenleiter-Schalter , daß auf einem der Trägerelemente (18) ein Führungselement (22, 23) mit mindestens zwei Führungskapillaren (22a, 23a) fixiert ist, wobei jede Führungskapillare des feststehenden Trägerelementes jeweils in einer bestimmten Schaltposition des beweglichen Trägerelementes (17) mit dessen Führungskapillaren (21a) fluchtet.

25. Koppelelement nach einem der Ansprüche 18 bis 21,
**dadurch gekennzeichnet,** daß
die Führungskapillaren (21a, 22a, 23a) jeweils an den von den Koppelstellen (K1, K2) abgewandten Ausgängen trichterförmig erweitert sind.

## Claims

1. Process for the mutual axial alignment of optical waveguides in fibre-to-fibre coupling positions, wherein the coupling ends of the optical fibres to be coupled (5, 6, 24, 25, 26) are aligned and fixed on a common carrier element (1, 17, 18) or respectively on a separate carrier element, characterised in that on the common carrier element or on the respective carrier elements (1, 17, 18), there is respectively arranged on both sides of the coupling point (K) of the fibre ends, a guide element (3, 4, 13, 14, 21, 22, 23) for the corresponding optical fibre,having a guide capillary (3a, 4a, 13a, 14a, 21a, 22a, 23a) accurately fitting the casing of the optical fibres to be coupled, in that the guide elements (3, 4, 13, 14, 21, 22, 23) are aligned with the aid of a deformation-free auxiliary fibre (2) having the same diameter as the optical fibres (5, 6, 24, 25, 26) to be coupled, and fixed on the common carrier element or their respective carrier element (1, 17, 18), and in that after removal of the auxiliary fibre (2) the coupling ends of the optical fibres (5, 6, 24, 25, 26) to be coupled are inserted and fixed into the respective guide capillaries (3a, 4a, 13a, 14a, 21a, 22a, 23a).

2. Process according to claim 1, characterised in that the guide elements (3, 4, 21, 22, 23) are formed by applying a plastic, hardenable or solidifying material to the common or the respective carrier elements (1, 17, 18) on both sides of the coupling point (K), and in that the guide capillaries (3a, 4a, 21a, 22a, 23a) in the guide elements (3, 4, 21, 22, 23) are produced by forming the auxiliary fibre (2), this auxiliary fibre (2) being coated with the plastics material on both sides of the coupling point (K) and being removed from the guide elements (3, 4, 21, 22, 23) after hardening or solidifying of the material.

3. Process according to claim 2, characterised in that a material is used for the formation of the guide elements (3, 4, 21, 22, 23) which produces an adhesive connection with the respective carrier element (1, 17, 18) but not with the auxiliary fibre (2).

4. Process according to claim 2 or 3, characterised in that a viscous hardenable plastics material is used as the material for the formation of the guide elements (3, 4, 21, 22, 23).

5. Process according to claim 2 or 3, characterised in that a temporarily liquefied solder is used as the material for the formation of the guide elements (3, 4, 21, 22, 23).

6. Process according to one of claims 2 to 5, characterised in that the auxiliary fibre (2) is coated with a film of parting compound before being covered with the plastics material.

7. Process according to claim 1, characterised in that the guide elements (13, 14) in the form of prefabricated guide bushes provided with the guide capillaries (13a, 14a) are jointly threaded on the auxiliary fibre (2) for alignment, arranged on both sides of the coupling point (K) and fixed on the respective carrier element (1).

8. Process according to claim 7, characterised in that in the prefabrication of the guide elements the guide bushes (13, 14) are made from a dimensionally-stable material and the guide capillaries (13a, 14a) are introduced by means of bores.

9. Process according to claim 7, characterised in that in the prefabrication the guide bushes (13, 14) are formed by coating an auxiliary fibre with a plastic, hardening or solidifying material and by subsequent removal of the auxiliary fibre.

10. Process according to one of claims 1 to 9, characterised in that the optical fibres (5, 6, 24, 25, 26) to be coupled are fixed by means of a hardenable adhesive after insertion into the respective guide capillary (3a, 4a, 13a, 14a, 21a, 22a, 23a).

11. Process according to one of claims 1 to 10, characterised in that at least one of the optical fibres to be coupled is adjusted by rotation about its axis before fixing in the guide capillary.

12. Process according to one of claims 1 to 10, characterised in that by aligning the optical fibres to be coupled in their longitudinal direction before they are fixed the desired front surface spacing is set.

13. Process according to one of claims 1 to 12, characterised in that a wire of a rigid and highly-tensile material is used as the auxiliary fibre, in particular an SiC whisker wire, a steel wire or a boron fibre.

14. Process according to one of claims 1 to 13, characterised in that the guide capillaries (3a, 4a) in the guide elements (3, 4) are provided respectively with a funnel-shaped widened portion (11, 12) on the ends remote from the coupling point (K).

15. Process according to claim 14, characterised in that when forming the guide elements (3, 4) by coating the auxiliary fibre (2), on the region of the guide elements remote from the coupling point (K) there is respectively provided a drop-shaped or conical coating (9, 10) of separating material on the auxiliary fibre (2), in that the auxiliary fibre (2) is then encased together with the coating (9, 10) with the guide element, and in that after hardening or solidifying of the guide element (3, 4) the auxiliary fibre (2) is removed with the coating (9, 10).

16. Process according to one of claims 1 to 15, characterised in that for the positionally correct insertion of a fibre end with respect to two fibre ends arranged to be offset, first of all a fixed and a movable carrier element (17, 18) are each provided with a guide element (21, 22), in that the auxiliary fibre (2) is then removed at least from one guide element, in that the movable carrier element (17) is brought into another position for forming a second coupling point (K2), and the auxiliary fibre (2) is pushed over the second coupling point, and in that finally a further guide element (23) is aligned and fixed by means of the auxiliary fibre (2).

17. Process according to claim 16, characterised in that the further guide element (23) is applied and moulded directly on a first guide element (22).

18. Process according to one of the preceding claims 1 to 17, characterised in that at least the optical fibres to be coupled are inserted into the capillaries laterally through the slot by using capillaries provided with a continuous slot parallel to their longitudinal axis.

19. Device for carrying out the process according to claim 18 having at least one carrier element (17, 18) with two guide elements (3, 4, 21, 22, 23) which can be assembled spaced apart from each other on the one or more than one carrier elements (17, 18), which guide elements respectively have a guide capillary (3a, 4a, 21a, 22a, 23a) which fits accurately the casing of the optical fibres to be coupled, each of which guide capillaries is provided with a slot (29) continuous with regard to its longitudinal axis, the edges (30) of which slot are constructed to be resiliently openable and whose width is less than the diameter of the fibre and having an auxiliary fibre (2) which can be inserted through the slots (29) into both guide capillaries, which auxiliary fibre has the same diameter as the optical fibres (5, 6) to be coupled.

20. Device according to claim 19, characterised in that the inner wall (31) of the guide capillaries (3a, 4a, 21a, 22a, 23a) is formed by a fibre coating (32) released from the auxiliary fibre (2).

21. A coupling element, produced according to one of claims 1 to 20, for an optical waveguide-switch having at least one fixed carrier element (18) and a movable carrier element (17) adjustable into at least two positions, wherein on each carrier element (17, 18) at least one coupling end of an optical fibre (24, 25, 26) to be coupled can be fixed, and wherein in at least one position of the movable carrier element (17) two carrier elements (17) are arranged with respect to each other so that optical fibres carried by them are in alignment with each other, characterised in that the carrier elements (17, 18) respectively have, fixed on them, guide elements (21, 22, 23) with preformed guide capillaries (21a, 22a, 23a) adapted to the diameter of the optical fibres (24, 25, 26) respectively to be coupled, in which capillaries the coupling ends of the fibres to be coupled can be inserted and in which they can subsequently be fixed.

22. Coupling element according to claim 18, characterised in that the guide elements are constructed as prefabricated capillary bushes (13, 14) and are secured on the carrier elements.

23. Coupling element according to claim 18, characterised in that the guide elements (21, 22, 23) are directly formed on the carrier elements (17, 18) and are hardened or solidified.

24. Coupling element for an optical wave guide switch produced according to one of claims 1 to 20, such that a guide element (22, 23) having at least two guide capillaries (22a, 23a) is fixed on one of the carrier elements (18), each guide capillary of the fixed carrier element being respectively in alignment in a specific switching position of the movable carrier element (17) with its guide capillaries (21a).

25. Coupling element according to one of claims 18 to 21, characterised in that the guide capillaries (21a, 22a, 23a) are respectively widened in a funnel shape at the outlets remote from the coupling points (K1, K2).

## Revendications

1. Procédé pour réaliser l'alignement axial réciproque de guides d'ondes lumineuses en des points de couplage fibre-à-fibre, selon lequel on accouple et on fixe les extrémités d'accouplement des fibres optiques (5,6,24,25,26) à accoupler sur un élément de support commun (1,17,18) ou respectivement sur un élément de support particulier,
caractérisé par le fait que sur l'élément de support commun ou sur les éléments de support respectifs (1,17,18) et des deux côtés du point de couplage (K) des extrémités des fibres, on dispose respectivement un élément de guidage (3, 4,13,14,21,22,23) pour les fibres optiques correspondantes, pourvu d'un capillaire de guidage (3a,4a,13a,14a,21a,22a,23a) adapté de façon précise à la gaine des fibres optiques à accoupler, qu'on aligne les éléments de guidage (3,4,13,14,21,22,23) à l'aide d'une fibre auxiliaire non déformée (2), traverse les deux capillaires de guidage et possède le même diamètre que les fibres optiques (5,6,24,25,26) à accoupler, et on les fixe sur l'élément de support commun ou sur leur élément de support respectif (1,17,18), et qu'après retrait de la fibre auxiliaire (2), on introduit et on fixe les extrémités d'accouplement des fibres optiques à accoupler (5,6,24,25,26), dans les capillaires respectifs de guidage (3a,4a,13a,14a,21a,22a,23a).

2. Procédé suivant la revendication 1, caractérisé par le fait qu'on forme les éléments de guidage (3,4,21,22,23) en déposant une matière plastique durcissable ou solidifiable sur l'élément de support commun ou les éléments de support respectifs (1,17,18) des deux côtés du point de couplage (K) et qu'on forme les capillaires de guidage (3a,4a,21a,22a,23a) dans les éléments de guidage (3,4,21,22,23) par déformation de la fibre auxiliaire (2), par le fait qu'on enveloppe la fibre auxiliaire (2) des deux côtés du point de couplage (K) par la matière plastique et qu'après durcissement ou solification du matériau, on retire la fibre auxiliaire, des éléments de guidage (3,4,21,22,23).

3. Procédé suivant la revendication 2, caractérisé par le fait que pour la formation des éléments de guidage (3,4,21,22,23), on utilise un matériau qui est fixé par collage à l'élément de support respectif (1,17,18), mais pas à la fibre auxiliaire (2).

4. Procédé suivant la revendication 2 ou 3, caractérisé par le fait qu'on utilise comme matériau pour la formation des éléments de guidage (3,4,21,22,23), une matière plastique visqueuse durcissable.

5. Procédé suivant la revendication 2 ou 3, caractérisé par le fait qu'on utilise comme matériau pour la formation des éléments de guidage (3,4,21,22,23), une brasure amenée provisoirement à l'état liquide.

6. Procédé suivant l'une des revendications 2 à 5, caractérisé par le fait qu'on recouvre la fibre auxiliaire (2) d'une pellicule d'un agent de séparation, avant de l'envelopper avec la matière plastique.

7. Procédé suivant la revendication 1, caractérisé par le fait qu'on emmanche les éléments de guidage (13,14) sous la forme de douilles de guidage préfabriquées, pourvues des capillaires de guidage (13a,14a), sur la fibre auxiliaire (2) conjointement pour l'alignement, on les dispose des deux côtés du point de couplage (K) et on les fixe sur l'élément de support respectif (1).

8. Procédé suivant la revendication 7, caractérisé par le fait que lors de la préfabrication des éléments de guidage, on fabrique les douilles de guidage (13,14) en un matériau de forme stable et on insère les capillaires de guidage (13,14,14a) dans des perçages.

9. Procédé suivant la revendication 7, caractérisé par le fait que lors de la préfabrication, on forme les douilles de guidage (13,14) par enveloppement d'une fibre auxiliaire par une matière plastique durcissable ou solidifiable et élimination ultérieure de la fibre auxiliaire.

10. Procédé suivant la revendication 1 à 9, caractérisé par le fait qu'après l'insertion des fibres optiques (5,6,24,25,26) à accoupler dans les capillaires respectifs de guidage (3a,4a,13a,14a,21a,22a, 23a), on fixe les fibres à l'aide d'une colle durcissable.

11. Procédé suivant l'une des revendications 1 à 10, caractérisé par le fait qu'avant la fixation des fibres optiques à accoupler dans le capillaire de guidage, on ajuste au moins l'une de ces fibres en la faisant tourner autour de son axe.

12. Procédé suivant l'une des revendications 1 à 10, caractérisé par le fait qu'au moyen de l'alignement des fibres optiques à accoupler, on règle, avant leur fixation, la distance désirée entre les surfaces frontales dans la direction longitudinale des fibres.

13. Procédé suivant l'une des revendications 1 à 12, caractérisé par le fait qu'on utilise comme fibre auxiliaire un fil formé d'un matériau rigide et résistant à la traction, notamment un fil formé de whiskers de SiC, un fil d'acier ou une fibre de bore.

14. Procédé suivant l'une des revendications 1 à 13, caractérisé par le fait qu'on forme respectivement un élargissement en forme d'entonnoir (11,12) dans les capillaires de guidage (3a,4a) dans les éléments de guidage (3,4), au niveau des extrémités situées à l'opposé du point de couplage (K).

15. Procédé suivant la revendication 14, caractérisé par le fait que lors de la formation des éléments de guidage (3,4) par enveloppement de la fibre auxiliaire (2) au niveau de la partie des éléments de guidage située à l'opposé du point de couplage (K), on prévoit respectivement une enveloppe en forme de goutte ou de forme conique (9,10) formée par un matériau de séparation sur la fibre auxiliaire (2), puis on enveloppe la fibre auxiliaire (2) ainsi que l'enveloppe (9,10) avec l'élément de guidage et après le durcissement ou la solifidification de l'élément de guidage (3,4), on retire la fibre auxiliaire (2) pourvue de l'enveloppe (9,10).

16. Procédé suivant l'une des revendications 1 à 15, caractérisé par le fait que pour réunir, d'une manière correcte en position, une extrémité d'une fibre en vis-à-vis de deux extrémités de fibres décalées, on prévoit tout d'abord un élément de support fixe et un élément de support mobile (17,18) comprenant chacun un élément de guidage (21,22), puis on retire la fibre auxiliaire (2) au moins d'un élément de guidage, on amène l'élément de support mobile (17) dans une autre position pour former un second point de couplage (K2) et on emmanche la fibre auxiliaire (2) par-dessus le second point de couplage, et qu'enfin on aligne et on fixe un autre élément de guidage (23) au moyen de la fibre auxiliaire (2).

17. Procédé suivant la revendication 16, caractérisé par le fait qu'on dispose ou on forme l'autre élément de guidage (23) directement sur le premier élément de guidage (22).

18. Procédé suivant l'une des revendications 1 à 17, caractérisé par le fait qu'on insère latéralement dans les capillaires au moins les fibres optiques à accoupler, en utilisant des capillaires pourvus d'une fente continue qui s'étend parallèlement à leur axe longitudinal, l'insertion s'effectuant par cette fente.

19. Dispositif pour la mise en oeuvre du procédé suivant la revendication 18, comportant au moins un élément de support (17,18) possédant deux éléments de guidage (3,4,21,22,23), qui peuvent être montés à distance l'un de l'autre sur le ou les éléments de support (17,18) et qui possèdent respectivement un capillaire de guidage (3a,4a,21a,22a,23a) adapté de façon précise à la gaine des fibres optiques à accoupler et dont chacun est pourvu d'une fente (29) qui est continue dans la direction de son axe longitudinal et dont les bords (30) sont agencés de manière à pouvoir être écartés élastiquement et dont la largeur est inférieure au diamètre des fibres, et comportant une fibre auxiliaire (2), qui peut être insérée par les fentes (29) dans les deux capillaires de guidage et possède le même diamètre que les fibres optiques (5,6) à accoupler.

20. Dispositif suivant la revendication 19, caractérisé par le fait que la paroi intérieure (31) des capillaires de guidage (3a,4a,21a,22a,23a) est formée par un revêtement de fibres (32) détaché de la fibre auxiliaire (2).

21. Élément de couplage fabriqué selon l'une des revendications 1-20 pour un interrupteur de guide d'ondes lumineuses comportant au moins un élément de support fixe (18) et un élément de support mobile (17) déplaçable dans au moins deux positions, et dans lequel au moins une extrémité de couplage d'une fibre optique (24,25,26) à accoupler peut être fixée à chaque élément de support (17,18) et deux éléments de support (17) sont disposés l'un par rapport à l'autre, pour au moins une position de l'élément de support mobile (17), de telle sorte que des fibres optiques qu'ils portent sont réciproquement alignées, caractérisé par le fait que les éléments de support (17,18) possèdent, respectivement sur des éléments de guidage (21,22,23), qui sont fixés sur eux, des capillaires de guidage préformés (21a,22a,23a), qui sont adaptés au diamètre de la fibre optique respective (24,25,26) à accoupler et dans lesquels les extrémités de couplage des fibres optiques à accoupler peuvent être insérées et peuvent être fixées ultérieurement.

22. Élément de couplage suivant la revendication 18, caractérisé par le fait que les éléments de guidage sont agencés sous la forme de douilles capillaires préfabriquées (13,14) et sont fixés sur les éléments de support.

23. Élément de couplage suivant la revendication 18, caractérisé par le fait que des éléments de guidage (21,22,23) sont formés et se solidifient ou durcissent directement sur les éléments de support (17,18).

24. Élément de couplage fabriqué suivant l'une des revendications 1-20 pour un interrupteur de guide d'ondes lumineuses, caractérisé par le fait qu'un élément de guidage (22,23) comportant au moins deux capillaires de guidage (22a,23a) est fixé sur l'un des éléments de support (18), chaque capillaire de guidage de l'élément de support fixe étant aligné avec le capillaire de guidage (21a) de l'élément de support mobile (17), respectivement dans une position de commutation déterminée de cet élément.

25. Élément de couplage suivant l'une des revendications 18 à 21, caractérisé par le fait que les capillaires de guidage (21a,22a,23a) sont élargis avec une forme d'entonnoir respectivement au niveau des sorties situées à l'opposé des points de couplage (K1,K2).
